(19) Europäisches Patentamt
European Patent Office
Office européen des brevets

(11) **EP 2 756 451 B1**

(12) **EUROPEAN PATENT SPECIFICATION**

(45) Date of publication and mention of the grant of the patent:
**21.10.2020 Bulletin 2020/43**

(51) Int Cl.:
*G06K 9/00* (2006.01)

(21) Application number: **11804784.4**

(22) Date of filing: **12.09.2011**

(86) International application number:
**PCT/IB2011/002726**

(87) International publication number:
**WO 2013/038224 (21.03.2013 Gazette 2013/12)**

(54) **METHODS AND APPARATUS FOR FAST IDENTIFICATION OF RELEVANT FEATURES FOR CLASSIFICATION OR REGRESSION**

VERFAHREN UND VORRICHTUNG ZUR SCHNELLEN IDENTIFIZIERUNG VON RELEVANTEN MERKMALEN ZUR KLASSIFIZIERUNG ODER REGRESSION

MÉTHODES ET APPAREILS POUR L'IDENTIFICATION RAPIDE DE CARACTÈRES APPROPRIES POUR LA CLASSIFICATION OU LA RÉGRESSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.07.2014 Bulletin 2014/30**

(73) Proprietor: **Perkinelmer Cellular Technologies Germany GmbH Eesti Filiaal**
**13522 Tallinn (EE)**

(72) Inventor: **KASK, Peet**
**Harku Vald, Harjumaa (EE)**

(74) Representative: **Graham Watt & Co LLP**
**St. Botolph's House**
**7-9 St. Botolph's Road**
**Sevenoaks TN13 3AJ (GB)**

(56) References cited:
• WEBB A R: "statistical pattern recognition - second edition , Feature selection and extraction", STATISTICAL PATTERN RECOGNITION, XX, XX, 1 January 2002 (2002-01-01), pages 305-318, XP002444702,
• KITTLER J: "Feature set search algorithms", 1 January 1978 (1978-01-01), PATTERN RECOGNITION AND SIGNAL PROCESSING : [PROCEEDINGS OF THE NATO ADVANCED STUDY INSTITUTE ON PATTERN RECOGNITION AND SIGNAL PROCESSING, E.N.S.T., PARIS, FRANCE, JUNE 25 - JULY 4, 1978] / ED. BY C. H. CHEN; [NATO ASI SERIES : SERIES E, APPLIED SCI, XP008152014, ISBN: 978-90-286-0978-5 sect.4; page 51 - page 55
• WALKER R F ET AL: "Classification of cervical cell nuclei using morphological segmentation and textural feature extraction", INTELLIGENT INFORMATION SYSTEMS,1994. PROCEEDINGS OF THE 1994 SECOND A USTRALIAN AND NEW ZEALAND CONFERENCE ON BRISBANE, QLD., AUSTRALIA 29 NOV.-2 DEC. 1994, NEW YORK, NY, USA,IEEE, 29 November 1994 (1994-11-29), pages 297-301, XP010136732, DOI: 10.1109/ANZIIS.1994.396977 ISBN: 978-0-7803-2404-6
• Pekalska ET AL: "Pairwise selection of features and prototypes", Advances in Soft Computing, 1 January 2005 (2005-01-01), XP55027528, Retrieved from the Internet: URL:http://homepage.tudelft.nl/a9p19/paper s/cores_05_featsel.pdf [retrieved on 2012-05-18]

**Description**

<u>Technical Field</u>

In various embodiments, the present invention relates to methods and apparatus for image analysis. More specifically, described herein are methods, and apparatus for fast identification of relevant features of objects depicted in an image for classification or regression.

<u>Background</u>

The ability to automatically classify objects into categories of interest has applications across a wide range of industries and scientific fields, including biology, social sciences, and finance. One particular application of interest is the classification of biological cells according to cell phenotype. Due to the large number of features (i.e., numeric properties) that typically must be calculated and considered in such classification, this process can be difficult, computationally intensive, and time-consuming.

For example, in the classification of cell phenotypes, typically hundreds of texture and morphology features of cells depicted in images are calculated and used for automated cell classification. First, training is performed whereby imaged cells are identified by a user as belonging to one of two or more categories. Many texture and morphology features are computed for each of these identified cells, and the system determines algorithms for distinguishing between the categories on the basis of these features. Then images containing cells of unidentified type can be analyzed to automatically determine cell type, based on those algorithms.

To improve the speed of this classification process, it is desirable to narrow down the number of texture and morphology features used for classification to something more manageable. Identification of a small subset of those features that are most effective for distinguishing a particular cell phenotype of interest is a complex problem. Unfortunately, there is no universally accepted, safe, and fast way to select a few relevant features and omit the features that in fact do not contribute to classification of cell phenotype.

Selection of a few relevant features out of hundreds of initially calculated features is a scientific problem that has several approaches but no commonly-accepted solution. For example, some features may be useful or relevant for classification only when considered in combination with one or more other features. As a further complication, the number of possible combinations of features is extremely high and trying them all is not practical. Current approaches of the classification of cell phenotype, such as Artificial Neuron Networks, utilize methods that are time-inefficient and non-transparent.

Thus, improved systems and methods are needed for fast identification of relevant features of objects depicted in images for classification or regression.

<u>Summary of the Invention</u>

The present invention discloses methods and apparatus for automated selection of image features useful for classifying cell phenotype according to the claims. A computationally elegant approach is presented herein for the automated selection of features of cells useful for classifying cell phenotype. The approach allows many parallel operations to be executed at the same time, thereby improving calculation speed. Compared with previous approaches, the approach described herein is capable of very fast training and classification. The approach is capable of quickly identifying a small set of features of imaged cells that are most relevant for classification of a desired cell phenotype from among a very large number of features. The small group of relevant features can then be used to more efficiently and more accurately classify phenotype of unidentified cells. Since the number of relevant features may be low, the approach is relatively transparent, particularly compared to existing approaches, such as Artificial Neuron Networks, which can be slow black boxes.

The images are 2D or 3D images.

<u>Brief Description of the Drawings</u>

The foregoing and other objects, aspects, features, and advantages of the invention will become more apparent and may be better understood by referring to the following description taken in conjunction with the accompanying drawings, in which:

FIGS. 1 through 4 are flowcharts of a method for automated selection of features, according to an illustrative embodiment of the invention;

FIG. 5 is a flowchart of a method for classifying cell phenotype, according to an illustrative embodiment of the invention;

FIG. 6 is a screenshot of a sequence of building blocks for detecting cells and extracting a number of texture and morphology features, according to an illustrative embodiment of the invention;

FIGS. 7 and 8 are screenshots of the selection process of cells for a training set in which representatives of two classes of cells are selected for use in determining relevant features and parameters of classification, according to an illustrative embodiment of the invention;

FIG. 9 is an image of selected cells of class A (native cells), according to an illustrative embodiment of the invention;

FIG. 10 is an image of selected cells of class B (treated cells), according to an illustrative embodiment of the invention;

FIG. 11 is an image of a matrix of signal-to-noise ratio (S/N) values for all pairs of features, according to an illustrative embodiment of the invention;

FIG. 12 is a plot of a best pair of features for distinguishing two classes of cells, according to an illustrative embodiment of the invention; and

FIG. 13 is a plot of a projection in a space of four significant features, according to an illustrative embodiment of the invention.

## Description

In certain embodiments, the systems, methods, and apparatus described herein perform feature selection for classification of objects by initially considering the ability of *pairs* of features determined from one or more images of the objects to distinguish between categories, rather than single features alone. In applications such as cell classification, considering pairs of features for distinguishing between two or more categories of cell phenotype is found to work more quickly and produce better results than considering features one-by-one. Accordingly, in one embodiment, the selection of a relevant set of features starts with selecting a number of best feature pairs.

The search for feature pairs may employ linear classification or regression, and the signal to noise ratio (S/N) may be used to measure quality of classification or regression. In one embodiment, an efficient algorithm is provided for maximizing S/N for all possible pairs of features in a single step. The approach handles hundreds of features in a very short calculation time, narrowing them down to a handful of salient features that are most useful for classification of cell phenotype.

In certain embodiments involving classification from among more than two categories, the multi-class problem is reduced to a number of two-class problems, thereby allowing the two-class problem approach described herein to be utilized.

According to the Fisher Linear Discriminant approach, the objective function to be maximized is the ratio of the variance between the classes $\sigma_b^2$ to the variance within the classes $\sigma_w^2$ (i.e., $\sigma_b^2 / \sigma_w^2$). In one embodiment, the square root of this ratio is S/N. In another embodiment, the result of finding an optimal linear combination, as described below, does not depend on whether the maximized function is S/N or its square. Variance between the two classes is

$$\sigma_b^2 = \left( w \cdot (\mu_2 - \mu_1) \right)^2. \qquad (1)$$

Variance within the classes is

$$\sigma_w^2 = w_T (\Sigma_1 + \Sigma_2) w. \qquad (2)$$

In the preceding equations, the vector of linear coefficients has been denoted by $w$, $w_T$ is the transpose of $w$, $\Sigma$ stands for within-class covariance matrix, $\mu$ is a vector of mean values, and the subscripts 1 and 2 denote the two classes. Linear coefficients that maximize the objective function may be expressed as

$$w = (\Sigma_1 + \Sigma_2)^{-1} (\mu_2 - \mu_1). \qquad (3)$$

In one embodiment, the case of two features is of special interest, and the following analytic solution for a 2x2 symmetric matrix is utilized:

$$\begin{bmatrix} a & b \\ b & c \end{bmatrix}^{-1} = \frac{1}{ac - b^2} \begin{bmatrix} c & -b \\ -b & a \end{bmatrix}. \qquad (4)$$

Specifically, this analytic solution is applied to the first factor on the right-hand side of equation (3).

Next, matrix algebra is applied to calculate the solution for each pair among a high number ($N$) of features. Instead of calculating a vector of two elements $w$ for each pair of features separately, an $N \times N$ matrix of linear coefficients of pairs of features is directly calculated. This matrix is referred to as $W$, in which $W_{ij}$ and $W_{ji}$ are linear coefficients for the feature pair with the $i^{th}$ and $j^{th}$ features. In the end, although the same, numerically identical set of linear coefficients is calculated in both cases, computation times are shorter in the second case, due to the large number of parallel operations without overhead cost. For example, starting with a table of 187 features and calculating the $W$-matrix, followed by calculation of signal to noise ratio (S/N) for each feature pair, the computation time may be less than 0.1 seconds using a Dell Latitude 630 (2.2 GHz laptop). More specifically, in a case where the number of objects is large (e.g., about 230), the calculation time depends on this number of objects only weakly, because the number influences only the first (fast) step of calculations, when the mean vector and covariance matrix are calculated for each class. In one embodiment, S/N is the square root of $\sigma_b^2 / \sigma_w^2$, where $\sigma_b^2$ and $\sigma_w^2$ are given by equations 1 and 2, respectively.

In certain embodiments, after having obtained a list of feature pairs in decreasing order of quality or S/N, as described above, attention is given to a rather short list of pre-selected features (e.g., around 20 features), which is compiled from a list of a limited number $N_P$ of best feature pairs. An input parameter of the pre-selection procedure is the number of times $N_S$ a single feature is allowed to appear, before all following pairs with the same feature are omitted.

In certain embodiments, $N_P$ (number of best feature pairs) and $N_S$ (number of times each feature is allowed to appear) are selected empirically. For example, with respect to cell classification, a high number of classification examples have been studied. This involved running the same set of examples several times using different values of $N_P$ and $N_S$. If $N_P$ (or $N_S$) is too small, then some relevant features may be omitted. On the other hand, if $N_P$ (or $N_S$) is too large, computation times may be excessive. It is found in certain embodiments involving classification of cell phenotype that $N_P$ is advantageously selected to be an integer from 10 to 30, and $N_S$ is advantageously selected to be an integer from 2 to 6.

Regarding the value of $N_S$, in some instances a single feature has an excellent S/N ratio by itself. In this situation, there is a danger that this single feature may bring too many weak partners into the list of preselected features. Therefore, the value of $N_S$ is preferably chosen to limit the number of appearances of a single feature, thereby avoiding the possibility of preselecting an excessive number of weak partners.

The next step in the classification or regression process is fine-selection of relevant features. In one embodiment, a set of relevant features is initialized with the best pair, and attempts are made to add one or more (e.g., two) features to the set. The feature or features are added if the improvement in S/N is significant (e.g., greater than four percent with the addition of a single feature, or greater than eight percent with the addition of two features). Likewise, in another embodiment, attempts are made to remove one feature, and the feature will be removed if the reduction in S/N is insignificant (e.g., less than four percent). As discussed in more detail below, these attempts to expand and contract the list of relevant features may be repeated until no changes in the list of relevant features occur. For reference, when the methods are used for cell phenotype classification, the number of relevant features determined this way is generally from two to six, although more features or fewer features may be determined.

In certain embodiments, when adding relevant features, it may be necessary to add two complementary features at a time to gain from the cooperation of the two features. When removing features, however, the features may be removed one at a time. In general, removing features one by one returns adequate results, even when there are pairs of features cooperating with each other.

Adding or removing a feature results in a corresponding increase or decrease in S/N. Different approaches may be used to determine whether the changes in S/N are significant. One such approach is an F-test. In this embodiment, the signal to noise ratio is calculated while considering the number of features. For example, each feature brings along an additional linear coefficient (i.e. an additional dimension of freedom). Alternatively, a simpler approach may be used. Specifically, the current hypothesis is rejected only if the alternative increases the S/N by more than a specified threshold factor. For example, good results have been obtained with a threshold factor of 1.05, which corresponds to a five percent increase in S/N. In other embodiments, the threshold factor is about 1.02, 1.04, 1.06, or 1.08.

As discussed in more detail below, in certain embodiments, the process of adding and/or removing partners to generate the list of features to be used for classification purposes begins with the best pair of features. Next, an attempt is made to add a partner. If this fails (e.g., the S/N does not increase by more than a threshold factor of, for example, 1.05), an attempt is made to add two partners at a time. With this attempt, the original threshold factor is squared (e.g., $1.05^2$). If this also fails, an attempt is made to remove a partner. When removing a partner is successful (e.g., if S/N is reduced by less than the factor 1.05), an attempt is again made to add a partner. This process of attempting to add or remove partners is stopped when all three kinds of attempts, described above, have failed. The process is unable to continue in a closed loop because, in each successive case, even though the same number of features may be repeated, S/N must have grown in such case.

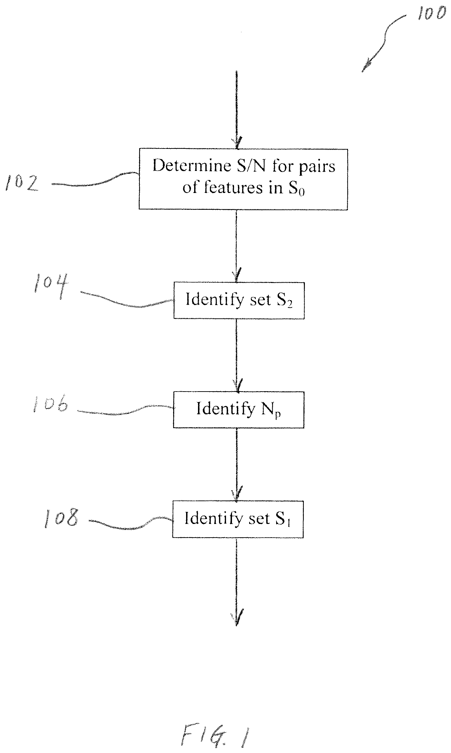

FIGS. 1 through 5 are flowcharts depicting a method 100 for automated selection of features of cells useful for classifying cell phenotype, in accordance with certain embodiments of the present invention. The features may be extracted from one or more images (e.g., 2D or 3D images) of the cells. Referring to FIG. 1, the method 100 includes determining (step 102) S/N for each of a plurality of pairs of features from an original set $S_0$ of $N_0$ calculated features of cells in one or more images. The S/N of a given pair of features reflects an ability to use that pair of features to classify cell phenotype. The method 100 also includes identifying (step 104) the set $S_2$ of $N_2$ calculated features for classification of cell phenotype from among the $N_0$ calculated features using the S/N values. As depicted, the method 100 includes identifying (step 106) a predetermined number $N_P$ of feature pairs from the original set $S_0$ of $N_0$ calculated features. The $N_P$ pairs have the highest S/N determined in step 102. The method 100 also includes identifying (step 108) a set $S_1$ of all features from which the set $S_2$ of $N_2$ features for classification of cell phenotype is selected. The set $S_1$ contains all distinct (non-redundant) members of the $N_P$ feature pairs except pairs that contain a given feature that has appeared in more than a predetermined number $N_S$ of pairs with higher S/N.

In one embodiment, at step 102, the S/N for all pairs of features is calculated and the pairs are ordered by S/N value. Then, at step 104, from the list of pairs of features with decreasing S/N value, the first few rows are used for identifying the set $S_1$.

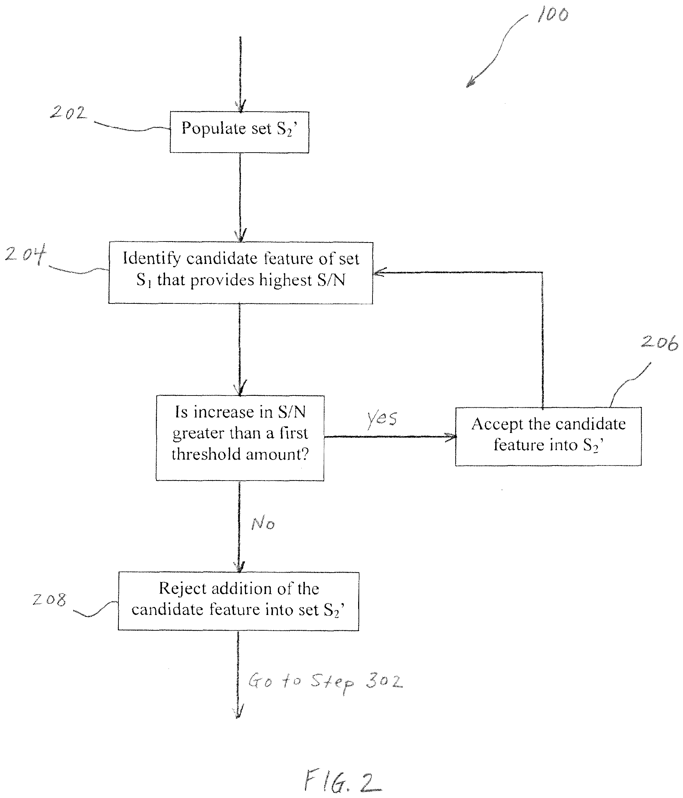

Referring to FIG. 2, in certain embodiments, the method 100 includes the step of populating (step 202) candidate set $S_2'$ with the feature pair having the highest S/N from among the $N_P$ feature pairs. For each candidate feature remaining in set $S_1$, that is not already in set $S_2'$, the method 100 includes determining a S/N for the set of all members of set $S_2'$ together with the candidate feature of set $S_1$. Next, the method 100 includes determining or identifying (step 204) which one of these candidate features of set $S_1$ provides the highest S/N when grouped with the members of set $S_2'$. This candidate feature is accepted (step 206) into set $S_2'$ if addition of the candidate feature into set $S_2'$ increases S/N by at least a first threshold amount. Step 204 is then repeated with the updated set $S_2'$. Alternatively, addition of the candidate feature into set $S_2'$ is rejected (step 208) if addition of the candidate feature of set $S_1$ into set $S_2'$ does not increase S/N of set $S_2'$ by at least the first threshold amount. In this case, the method 100 proceeds to step 302.

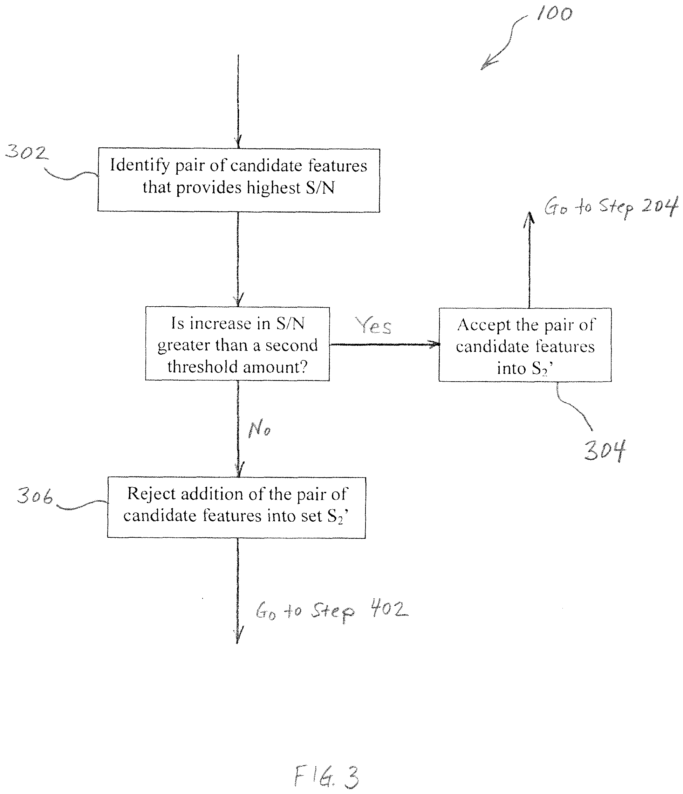

Referring to FIG. 3, in certain embodiments, for each possible pair of candidate features remaining in set $S_1$ that are not already in set $S_2'$, the method 100 includes determining a S/N for the set of all members of set $S_2'$ together with the pair of candidate features from set $S_1$. At step 302, the method 100 includes determining or identifying which one of these pairs of candidate features of set $S_1$ provides the highest S/N when grouped with the members of set $S_2'$. This pair of candidate features is accepted (step 304) into set $S_2'$, and step 204 is repeated with the updated set $S_2'$, if addition of the pair of candidate features into set $S_2'$ increases S/N by at least a second threshold amount. Alternatively, addition of the pair of candidate features into set $S_2'$ is rejected (step 306) if addition of the candidate pair of features into set $S_2'$ does not increase S/N by at least the second threshold amount. In this case, the method 100 proceeds to step 402.

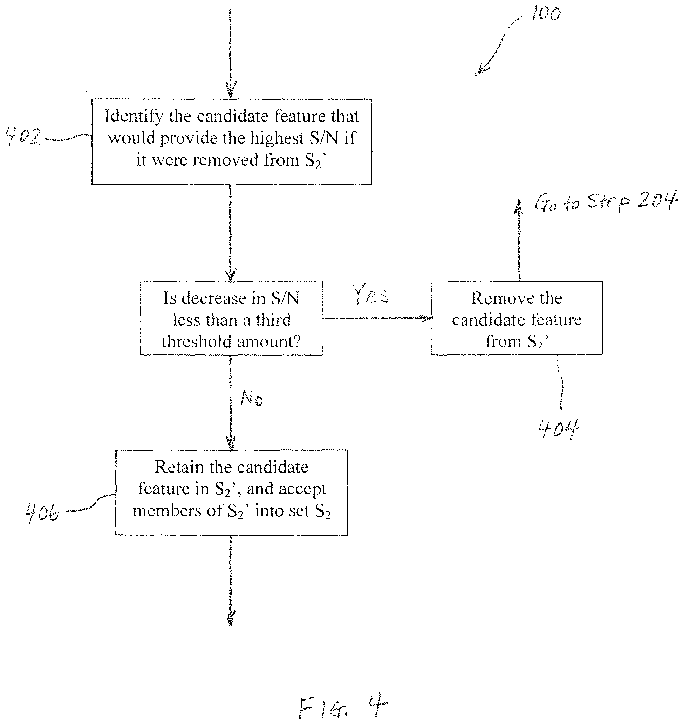

Referring to FIG. 4, in certain embodiments, for each given member of set $S_2'$, the method 100 includes determining a S/N for the set of all the members of set $S_2'$ except the given member. The method 100 also includes determining or identifying (step 402) which one of the given members results in the highest S/N of the set $S_2'$ with the given member removed from set $S_2'$. The given member is removed (step 404) from set $S_2'$, and step 204 is repeated with the updated set $S_2'$, if removal of this given member from set $S_2'$ reduces S/N of set $S_2'$ by less than a third threshold amount. Alternatively, the given member is retained (step 406) in set $S_2'$, and members of candidate set $S_2'$ are accepted into set $S_2$, if removal of the given member from set $S_2'$ does not reduce S/N of set $S_2'$ by less than the third threshold amount.

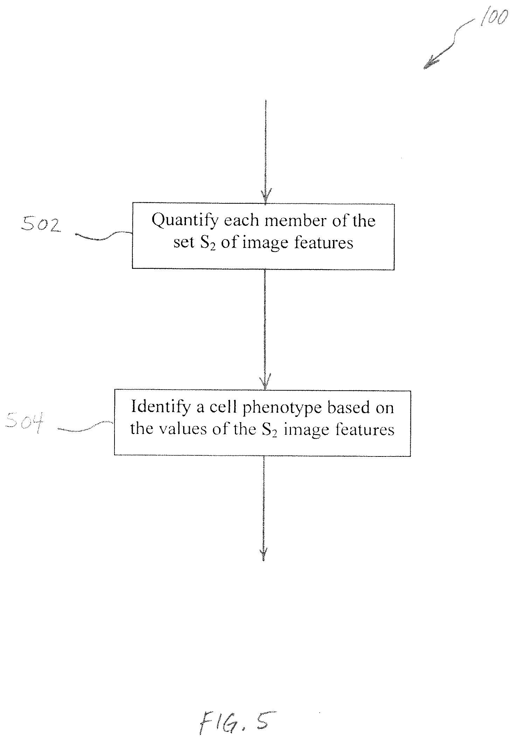

Referring to FIG. 5, in certain embodiments, the method 100 is used to classify cell phenotype of one or more selected cells. The method 100 includes the step of, for each of the one or more selected cells, quantifying (step 502) each member of the set $S_2$ of image features. For each of the one or more selected cells, the method 100 also includes identifying (step 504) a cell phenotype for that cell based on the values of the $S_2$ image features for that cell, quantified in step 502.

In certain embodiments, the method 100 includes the step of calculating, as part of step 102, an $N_0 \times N_0$ matrix of linear coefficients, W. The elements $W_{i,j}$ of matrix W are measures of S/N for corresponding feature pairs (i,j) and are calculated using an analytical solution for inversion of a 2 x 2 symmetric matrix. The objective function may be a ratio of variance between two classes to variance within the two classes. As mentioned, S/N may be the square root of this ratio.

In another embodiment, many objective functions are involved in the method 100. Specifically, while W is presented as a single $N_0 \times N_0$ matrix, it may represent a high number of two-element vectors ($w_{ij}$, $w_{ji}$), each of which corresponds to an objective function and the S/N of the given feature pair (i,j).

The method 100 may also include identifying the cell phenotype for a cell, wherein the cell phenotype is one class selected from two possible classes or three or more possible classes. In certain embodiments, the magnitude of the third threshold amount is the same as the magnitude of the first threshold amount, and the magnitude of the second threshold amount is twice the magnitude of the first threshold amount.

In certain embodiments, the methods described herein are implemented on a computer using software code that includes a set of instructions.

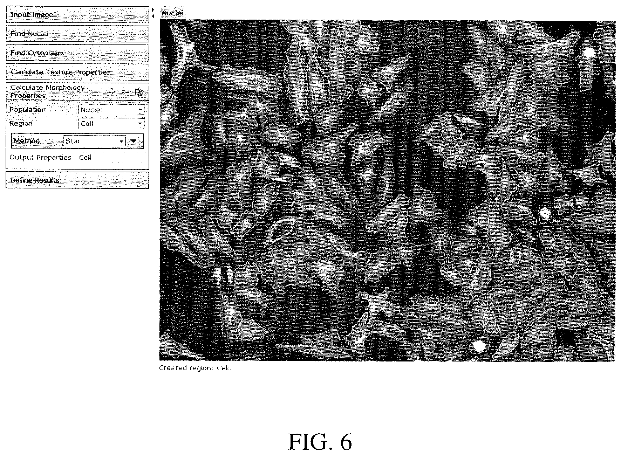

Referring to the screenshot in FIG. 6, at a preliminary stage of the feature selection process, a sequence of building blocks is created for detecting cells and extracting a high number of intensity, texture and morphology features.

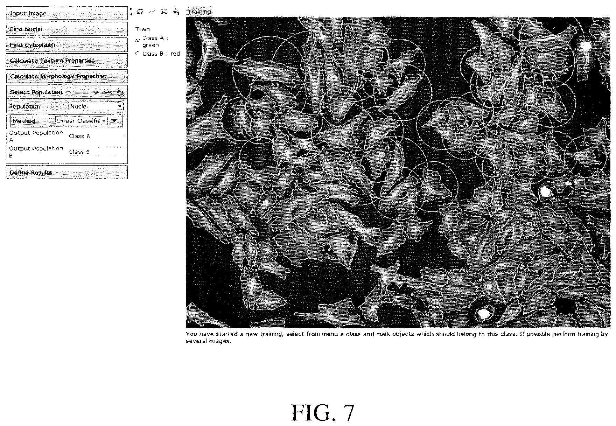

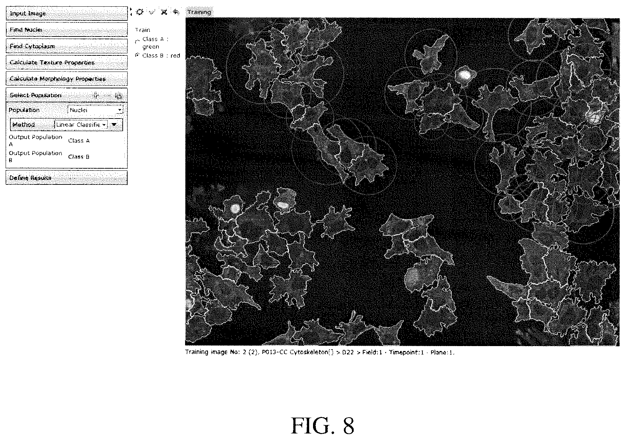

As the next step, a new building block Select Population is added, and a linear classifier method is selected. The software code then guides a user to the training mode in which the system identifies the most significant pairs of features and determines parameters (i.e. linear coefficients) for classification. The training stage begins with instructions in which the user creates a training set of cells. Using an input device, such as a mouse or keyboard, the user identifies cells that belong to each class. In the depicted embodiment, cells of one class (class A) are selected from a sample (well D13) shown in FIG. 7, and cells of another class (class B) are selected from another sample (well D22) shown in FIG. 8. In other examples (not shown), cells of different classes are selected from the same image (the same well).

In certain embodiments, the training mode is a stage in which the user inputs instructions. The user selects representatives of class 1 and class 2 (or more classes if there are more). When representatives of all classes have been selected, the computer identifies relevant features and calculates linear coefficients for classification. Together, these two stages or steps are called training.

When instructions are completed, or when the user wants to see the outcome of classification, the user may push or click "accept and exit training." At this point, the software code directs the computer or processor to pre-select potentially relevant features. For example, out of 187 features, fourteen features may be automatically identified at this stage. Next, the computer enters the stage of fine-selection of features by selecting four relevant features of these fourteen for use in classification. Next, parameters of classification (e.g., linear coefficients for the four selected features and an offset) are determined which completes preparations for classification of cells.

In certain embodiments, the systems, methods, and apparatus described herein are used to determine optimum groups of features for discriminating between three or more classifications (i.e., not just two). For example, with three classes, a two-class classifier may be applied for all three pairs of classes. With more than three classes, the number of class pairs is greater than three, with each pair of classes presenting a set of features. In one embodiment, during the step of pre-selecting features, preselected features from each class pair may be combined to form a single reservoir of pre-selected features (common for all class pairs).

The systems, methods, and apparatus described herein have applications in many different scientific fields and industries. Classification is a general field in mathematics and has applications in a wide spectrum of sciences (from physics to social sciences). As described above, these techniques may be used to classify cell phenotype. In certain embodiments, the techniques are used to detect gender from photographs. For example, after extracting a high number of features from photos and selecting a training set with a known gender, most relevant features may be selected using the approach described here. In another embodiment, the techniques are used to make investment decisions. In this case, after extracting a high number of features (e.g., of securities and security markets) that may be relevant in investment decisions and selecting a training set (e.g., using historical data and known measures of success), the most relevant features can be determined using the approach described here. In yet another embodiment, the techniques are used to predict earthquakes. In this application, after extracting a high number of features that are relevant for predicting earthquakes, and selecting a training set (using historical data with known earthquake times and magnitudes), the most relevant features can be determined using the approach described here.

When the methods, systems, and apparatus described herein are used for cell classification, various intensity, texture, and morphology features may be considered. While there are no universally accepted feature sets for classification of cells, examples of cell features that may be calculated or considered for this task include: a morphological feature, a geometrical feature, a Zernike moment feature, a Haralick texture feature, an edge feature, a wavelet feature, a region property, a cellular adjacency feature, a clustering feature, a phenotype shape descriptor, a kinetic measurement, and a subcellular location feature (e.g., distance from an organelle to a nucleus). Additional features useful for classification of cells are described in the following references: X. Chen, M. Velliste, R. F. Murphy, Automated Interpretation of Subcellular Patterns in Fluorescence Microscopy Images for Location Proteomics, Cytometry Part A 69A: 631-640 (2006); N. A. Hamilton, R. S. Pantelic, K. Hanson, R. D. Teasdale, Fast Automated Cell Phenotype Image Classification, BMC Bioinformatics 8: 110 (2007); L.-H. Loo, L. F. Wu, S. J. Altschuler, Image-Based Multivariate Profiling of Drug Responses from Single Cells, Nature Methods 4(5): 445-453 (2007); J. Wang, X. Zhou, P. L. Bradley, S.-F. Chang, N. Perrimon, S. T. C. Wong, Cellular Phenotype Recognition for High-Content RNA Interference Genome-Wide Screening, J Biomolecular Screening 13(1): 29-39 (2008); V. Ljosa, A. E. Carpentier, Introduction to the Quantitative Analysis of Two-Dimensional Fluorescence Microscopy Images for Cell-Based Screening, PLoS Computational Biology, 5(12): el000603 (2009); and M. Held, M. H. A. Schmitz, B. Fischer, T. Walter, B. Neumann, M. H. alma, M. Peter, J. Ellenberg, D. W. Gerlich, CellCognition: Time-Resolved Phenotype Annotation in High-Throughput Live Cell Imaging, Nature Methods 7(9): 747-754 (2010).

It should be noted that embodiments of the present invention may be provided as one or more computer-readable programs embodied on or in one or more articles of manufacture. The article of manufacture may be any suitable hardware apparatus, such as, for example, a floppy disk, a hard disk, a CD ROM, a CD-RW, a CD-R, a DVD ROM, a DVD-RW, a DVD-R, a flash memory card, a PROM, a RAM, a ROM, or a magnetic tape. In general, the computer-readable programs may be implemented in any programming language. Some examples of languages that may be used include C, C++, or JAVA. The software programs may be further translated into machine language or virtual machine instructions and stored in a program file in that form. The program file may then be stored on or in one or more of the articles of manufacture.

A computer hardware apparatus may be used in carrying out any of the methods described herein. The apparatus may include, for example, a general purpose computer, an embedded computer, a laptop or desktop computer, or any other type of computer that is capable of running software, issuing suitable control commands, receiving graphical user input, and recording information. The computer typically includes one or more central processing units for executing the instructions contained in software code that embraces one or more of the methods described herein. The software may include one or more modules recorded on machine-readable media, where the term machine-readable media encompasses software, hardwired logic, firmware, object code, and the like. Additionally, communication buses and I/O ports may be provided to link any or all of the hardware components together and permit communication with other computers and computer networks, including the internet, as desired. The computer may include a memory or register for storing data.

In certain embodiments, the modules described herein may be software code or portions of software code. For example, a module may be a single subroutine, more than one subroutine, and/or portions of one or more subroutines. The module may also reside on more than one machine or computer. In certain embodiments, a module defines data by creating the data, receiving the data, and/or providing the data. The module may reside on a local computer, or may be accessed via network, such as the Internet. Modules may overlap - for example, one module may contain code that is part of another module, or is a subset of another module.

The computer can be a general purpose computer, such as a commercially available personal computer that includes a CPU, one or more memories, one or more storage media, one or more output devices, such as a display, and one or more input devices, such as a keyboard. The computer operates using any commercially available operating system, such as any version of the Windows™ operating systems from Microsoft Corporation of Redmond, Wash., or the Linux™ operating system from Red Hat Software of Research Triangle Park, N.C. The computer is programmed with software including commands that, when operating, direct the computer in the performance of the methods of the invention. Those of skill in the programming arts will recognize that some or all of the commands can be provided in the form of software, in the form of programmable hardware such as flash memory, ROM, or programmable gate arrays (PGAs), in the form of hard-wired circuitry, or in some combination of two or more of software, programmed hardware, or hard-wired circuitry. Commands that control the operation of a computer are often grouped into units that perform a particular action, such as receiving information, processing information or data, and providing information to a user. Such a unit can include any number of instructions, from a single command, such as a single machine language instruction, to a plurality of commands, such as a plurality of lines of code written in a higher level programming language such as C++. Such units of commands are referred to generally as modules, whether the commands include software, programmed hardware, hard-wired circuitry, or a combination thereof. The computer and/or the software includes modules that accept input from input devices, that provide output signals to output devices, and that maintain the orderly operation of the computer. The computer also includes at least one module that renders images and text on the display. In alternative embodiments, the computer is a laptop computer, a minicomputer, a mainframe computer, an embedded computer, or a handheld computer. The memory is any conventional memory such as, but not limited to, semiconductor memory, optical memory, or magnetic memory. The storage medium is any conventional machine-readable storage medium such as, but not limited to, floppy disk, hard disk, CD-ROM, and/or magnetic tape. The display is any conventional display such as, but not limited to, a video monitor, a printer, a speaker, an alphanumeric display. The input device is any conventional input device such as, but not limited to, a keyboard, a mouse, a touch screen, a microphone, and/or a remote control. The computer can be a stand-alone computer or interconnected with at least one other computer by way of a network. This may be an internet connection.

As used herein, an "image" - for example, an image of one or more cells - includes any visual representation, such as a photo, a video frame, streaming video, as well as any electronic, digital or mathematical analogue of a photo, video frame, or streaming video. Any apparatus described herein, in certain embodiments, includes a display for displaying an image or any other result produced by the processor. Any method described herein, in certain embodiments, includes a step of displaying an image or any other result produced via the method.

Example

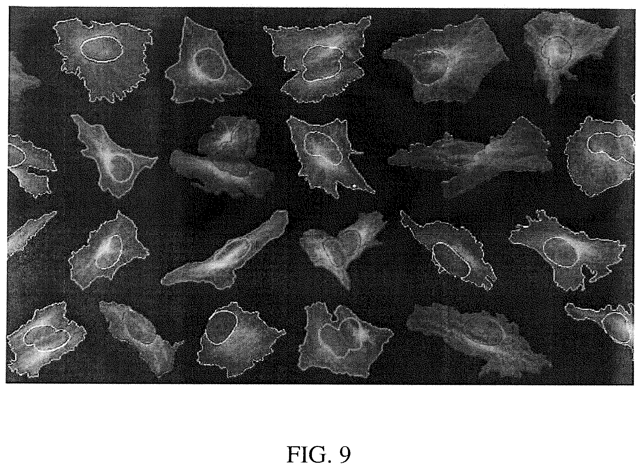

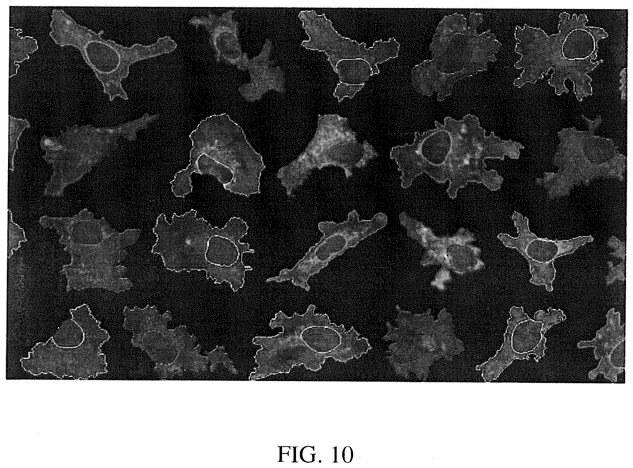

FIGS. 9 and 10 depict images of native cells and treated cells (i.e., cells that have been treated with a biochemically active compound), respectively, in accordance with one illustrative example of the present invention. Comparing the cells in these two figures, it is seen that the two different types of cells differ in appearance. For example, the treated cells include edges or boundaries that are more irregular than the edges of the native cells. In addition, while the native cells are textured by lines with preferred radial orientation, the treated cells have spots rather than lines. The radial distribution of intensity is also different for the two classes of cells.

To classify these cells, the goal was to identify a set of relevant features that were best suited for distinguishing the two populations. In this case, 187 intensity, texture, and morphology features were calculated for both sets of cells.

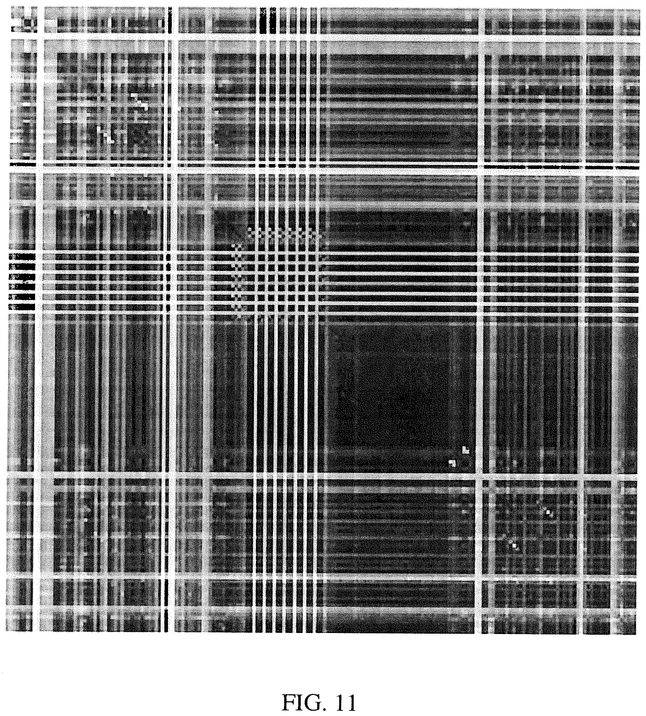

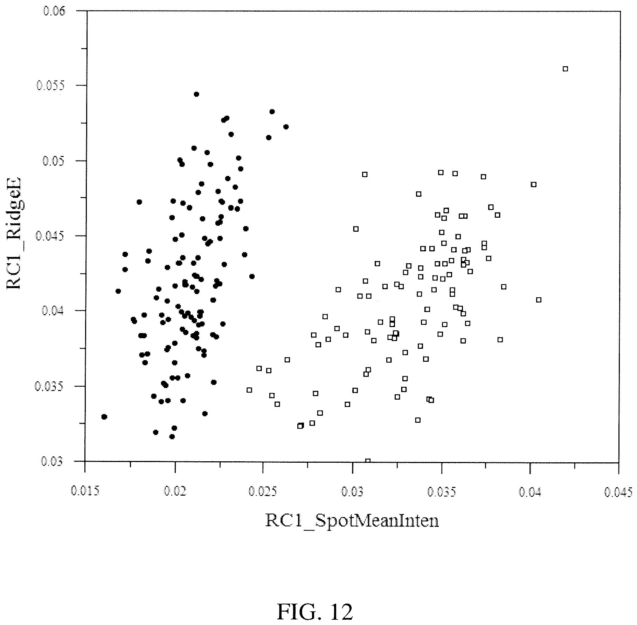

FIG. 11 depicts an image of a 187 x 187 matrix in which each row and each column represents one of these features, and each element in the matrix represents a pair of features. The value of each element of the matrix is represented by a pixel in the image, and each pixel has an intensity corresponding to the S/N of the best projection on the plane of the corresponding pair of features. In one embodiment, the plane of features (i,j) is simply the plane with the x-coordinate being feature i and the y-coordinate being feature j. The intensity value of element i,j corresponds to the S/N for the pair of features having index values (i,j). Because pair i,j is the same as pair j,i, the matrix is naturally symmetrical. As depicted, the maximum S/N value in this example (i.e., S/N = 2.68) occurred at the pair of index values (8,40). This means that the two features having index values 8 and 40 were the best pair in this example. In FIG. 12, cells from training images are plotted on the plane of the best pair of features. Each black circle in this figure represents a native cell, and each square represents a treated cell. The x-axis represents feature "RC1_SpotMeanInten," which is a texture feature quantifying mean intensity of a spot-filtered image normalized by the original image. The y-axis represents feature "RC1_RidgeE," which is a combined texture-morphology feature characterizing intensity of a ridge-filtered image in an outer region of cytoplasm.

The next step was to pick a selected number of feature pairs with the highest values of S/N. In this case, $N_P$ was 16 and $N_S$ was 4.

Next, a list of features appearing at least once among the selected pair of features was compiled to obtain a pre-selected list of features. In this example, the pre-selected list of features included $N_1$=14 features, obtained with $N_P$=16, and $N_S$=4. Specifically, with 16 pairs of features, five features appeared only once, three features appeared two times, three features appeared three times, and three features appeared four times. Thus, there were 14 unique features among 16 selected pairs of features. Other features were ignored in subsequent steps. In this example, the calculation time of pre-selection of features was 0.25 seconds, using a Dell Latitude 630 (2.2 GHz laptop). This time does not include the time required to calculate 187 features of 228 cells, which was a couple of seconds.

Next, beginning with the best pair of features, the best third partner to add to the existing list of features was identified. In this example, the best third partner was at index 10, among the 14 features. With three features, S/N increased from 2.68 to 3.29, which is significant.

Next, attempts were made to expand the list even further. By including the index values (0, 1, 10, and 2), the S/N increased to 3.51. Further expansion of the list did not increase S/N significantly. Therefore, attempts were then made to contract the list, and the list was reduced by one feature (with index 1).

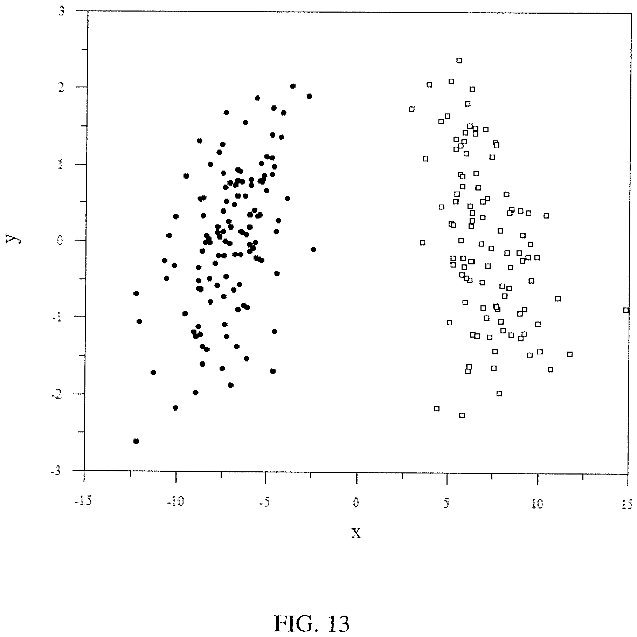

After repeated attempts of expansion and, if expansion was not successful, contraction, the best set of features was obtained, having index values (0, 10, 2, 12) and S/N=3.74. The calculation time associated with the fine-selection of features just described was 0.4 seconds. FIG. 13 is a plot of the best projection (x-axis) in the space of the four significant features, together with another neutral projection (y-axis, for illustrative purposes only) selected from the plane of two first principal components.

Other input parameters of the pre-selection procedure have also been tested. For example, when selecting $N_p$=40 and $N_s$=6, the final result in this example remained the same. In a majority of all other examples studied, the result was substantially independent of the input parameters $N_p$ and $N_s$. Even in the rare cases when a dependence was detected, the difference in terms of S/N was small. In certain embodiments, it is preferable to avoid very small values of $N_p$. For example, it may be preferable to set $N_p$ equal to at least eight.

In certain embodiments, to select appropriate values of $N_p$ and $N_s$, the goal is to achieve substantially the same S/N when $N_p$ and $N_s$ are further increased. When $N_p$ and Ns are determined in this manner, relevant features will not be missed during the pre-selection stage. However, when $N_p$ is reduced below a critical limit, the result may get worse.

## Claims

1. A method for automated selection of image features useful for classifying cell phenotype, the method comprising the steps of:

(a) calculating an original set $S_0$ of $N_0$ features for imaged cells having a first known class and for imaged cells having a second known class;

(b) selecting a plurality of pairs of features from the original set $S_0$ and determining for each said pair of features a signal-to-noise ratio (S/N) between the first and the second known class, wherein the S/N is a function of the ratio of variance between classes ($\sigma_b^2$) to variance within the classes ($\sigma_w^2$);

(c) identifying, in decreasing order of value S/N, a predetermined number $N_p$ of feature pairs with highest value S/N determined in step (b), wherein $N_p$ is an integer $\geq 2$; and

(d) after a predefined number $N_s$ of times a single feature appears in the feature pairs identified at step (c), omitting all following pairs with the same feature from the feature pairs identified at step (c) and identifying the set $S_1$ of distinct features within the remaining feature pairs;

(e) selecting a set $S_2$ of $N_2$ features for classification of cell phenotype from the set $S_1$.

2. The method of claim 1, wherein step 1(e) comprises selecting set $S_2$ by:

(i) populating candidate set $S_2'$ with the feature pair having the highest S/N ratio from among the $N_p$ feature pairs, then proceeding to step (ii);

(ii) for each candidate feature remaining in set $S_1$ that is not already in set $S_2'$, determining a S/N ratio for the set of all members of set $S_2'$ together with the candidate feature of set $S_1$, determining which one of these candidate features of set $S_1$ provides the highest S/N ratio when grouped with the members of set $S_2'$, accept this candidate feature of set $S_1$ into set $S_2'$ and repeating step (ii) with the updated set $S_2'$ where addition of the candidate feature of set $S_1$ into set $S_2'$ increases S/N ratio by at least a first threshold amount, and rejecting addition of the candidate feature of set $S_1$ into set $S_2'$ and proceeding to step (iii) if addition of the candidate feature of set $S_1$ into set $S_2'$ does not increase S/N ratio of set $S_2'$ by at least the first threshold amount;

(iii) for each possible pair of candidate features remaining in set $S_1$ that are not already in set $S_2'$, determining a S/N ratio for the set of all members of set $S_2'$ together with the pair of candidate features from set $S_1$, determining which one of these pairs of candidate features of set $S_1$ provides the highest S/N ratio when grouped with the members of set $S_2'$, accepting this pair of candidate features of set $S_1$ into set $S_2'$ and repeating step (ii) with the updated set $S_2'$ where addition of the pair of candidate features of set $S_1$ into set $S_2'$ increases S/N ratio by at least a second threshold amount, and rejecting addition of the pair of candidate features of set $S_1$ into set $S_2'$ and proceeding to step (iv) if addition of the candidate pair of features of set $S_1$ into set $S_2'$ does not increase S/N ratio by at least the second threshold amount; and

(iv) for each given member of set $S_2'$, determining a S/N ratio for the set of all the members of set $S_2'$ except the given member, determining which one of the given members results in the highest S/N ratio of the set $S_2'$ with the given member removed from set $S_2'$, removing this given member from set $S_2'$ and repeating step (ii) with the updated set $S_2'$ where removal of this given member from set $S_2'$ increases S/N ratio of set $S_2'$ by at least a third threshold amount, and retaining this given member in set $S_2'$ and accepting members of candidate set $S_2'$ into set $S_2$ where removal of this given member from set $S_2'$ does not increase S/N ratio of set $S_2'$ by at least the third threshold amount.

3. The method of claim 2, wherein the magnitude of the third threshold amount is the same as the magnitude of the first threshold amount, and the magnitude of the second threshold amount is twice the magnitude of the first threshold amount.

4. The method of any one of the preceding claims, further comprising determining a S/N ratio for each of a plurality of pairs of features from an original set $S_0$ of $N_0$ calculated features of cells in one or more images, wherein the S/N ratio of a given pair of features reflects an ability to use that pair of features to classify cell phenotype, wherein $N_0$ is an integer from about 100 to about 1000, and further comprising identifying the set $S_2$ of $N_2$ calculated features for classification of cell phenotype from among the members of the $N_p$ pairs of calculated features, wherein $N_2$ is an integer no greater than about 10.

5. The method of any one of the preceding claims, wherein $N_2$ is an integer from 2 to 6.

6. The method of any one of the preceding claims, wherein $N_p$ is an integer between 10 and 30.

7. The method of any one of the preceding claims, wherein $N_s$ is an integer between 2 and 6.

8. The method of any one of the preceding claims, wherein the method comprises, classifying cell phenotype of one or more selected cells by:

(I) for each of the one or more selected cells, quantifying each member of the set $S_2$ of image features; and

(II) for each of the one or more selected cells, identifying a cell phenotype for that cell based on the values of the $S_2$ image features for that cell.

9. The method of claim 8, comprising, for each of the one or more selected cells, identifying the cell phenotype for that cell, wherein the cell phenotype is either one class selected from two possible classes, or is one class selected from three or more possible classes.

10. The method of claim 9, wherein the features of cells for which S/N ratios are determined comprise one or more members selected from the group consisting of: a morphological feature, a geometrical feature, a Zernike moment feature, a Haralick texture feature, an edge feature, a wavelet feature, a region property, a cellular adjacency feature, a clustering feature, a phenotype shape descriptor, a kinetic measurement, and a subcellular location feature (e.g., distance from an organelle to a nucleus).

11. The method of any one of the preceding claims, comprising determining a S/N ratio for each possible pairwise combination of features among a plurality of pairs of features from an original set $S_0$ of $N_0$ calculated features of cells in one or more images, wherein the S/N ratio of a given pair of features reflects an ability to use that pair of features to classify cell phenotype.

12. The method of claim 11, comprising calculating an $N_0 \times N_0$ matrix of linear coefficients, **W**, for maximizing an objective function, wherein the elements $W_{i,j}$ of matrix **W** are measures of S/N ratio for corresponding feature pairs ($i,j$) and are calculated using an analytical solution for inversion of a 2x2 symmetric matrix.

13. The method of claim 12, wherein the objective function is a ratio of variance between two classes to variance within the two classes.

14. An apparatus for automated selection of image features useful for classifying cell phenotype, the apparatus comprising means adapted to execute the method according to claims 1 to 13.


**Patentansprüche**

1. Verfahren für eine automatisierte Auswahl von Bildmerkmalen, die zum Klassifizieren eines Zellphänotyps verwendbar sind, wobei das Verfahren die folgenden Schritte umfasst:

   (a) Berechnen eines ursprünglichen Satzes $S_0$ von $N_0$ Merkmalen für abgebildete Zellen, die eine erste bekannte Klasse aufweisen, und für abgebildete Zellen, die eine zweite bekannte Klasse aufweisen;
   (b) Auswählen mehrerer Merkmalspaare aus dem ursprünglichen Satz $S_0$ und Bestimmen für jedes der Merkmalspaare eines Signal-Rausch-Verhältnisses (S/N) zwischen der ersten und der zweiten bekannten Klasse, wobei das S/N eine Funktion des Verhältnisses der Varianz zwischen Klassen ($\sigma_b^2$) zu der Varianz innerhalb der Klassen ($\sigma_w^2$) ist;
   (c) Identifizieren, in absteigender Reihenfolge des Werts S/N, einer zuvor bestimmten Anzahl $N_p$ von Merkmalspaaren mit dem höchsten Wert S/N, der in Schritt (b) bestimmt wird, wobei $N_p$ eine ganze Zahl $\geq 2$ ist; und
   (d) nach einer vordefinierten Anzahl $N_s$ von Malen, die ein einzelnes Merkmal in den bei Schritt (c) identifizierten Merkmalspaaren erscheint, Weglassen aller folgenden Paare mit demselben Merkmal aus den bei Schritt (c) identifizierten Merkmalspaaren und Identifizieren des Satzes $S_1$ eindeutiger Merkmale innerhalb der verbleibenden Merkmalspaare;
   (e) Auswählen eines Satzes $S_2$ von $N_2$ Merkmalen zum Klassifizieren des Zellphänotyps aus dem Satz $S_1$.

2. Verfahren nach Anspruch 1, wobei Schritt 1(e) das Auswählen des Satzes $S_2$ durch Folgendes umfasst:

   (i) Besetzen des Kandidatensatzes $S_2$' mit dem Merkmalspaar, das das höchste S/N-Verhältnis unter den $N_p$ Merkmalspaaren aufweist, dann Fortfahren zu Schritt (ii);
   (ii) für jedes Kandidatenmerkmal, das in Satz $S_1$ verbleibt, das nicht bereits in Satz $S_2$' enthalten ist, Bestimmen eines S/N-Verhältnisses für den Satz aller Elemente von Satz $S_2$' gemeinsam mit dem Kandidatenmerkmal von Satz $S_1$, Bestimmen, welches dieser Kandidatenmerkmale von Satz $S_1$ das höchste S/N-Verhältnis bereitstellt, wenn es mit den Elementen von Satz $S_2$' gruppiert wird, Akzeptieren dieses Kandidatenmerkmals von Satz $S_1$ zu Satz $S_2$' und Wiederholen des Schritts (ii) mit dem aktualisierten Satz $S_2$', wobei ein Hinzufügen des Kandidatenmerkmals von Satz $S_1$ zu Satz $S_2$' das S/N-Verhältnis um wenigstens einen ersten Schwellenbetrag steigert, und Ablehnen des Hinzufügens des Kandidatenmerkmals von Satz $S_1$ zu Satz $S_2$' und Fortfahren zu Schritt (iii), wenn das Hinzufügen des Kandidatenmerkmals von Satz $S_1$ zu Satz $S_2$' das S/N-Verhältnis von Satz $S_2$' nicht um wenigstens den ersten Schwellenbetrag steigert;
   (iii) für jedes mögliche Kandidatenmerkmalspaar, das in Satz $S_1$ verbleibt, das nicht bereits in Satz $S_2$' enthalten ist, Bestimmen eines S/N-Verhältnisses für den Satz aller Elemente von Satz $S_2$' gemeinsam mit dem Kandi-

datenmerkmalspaar aus Satz $S_1$, Bestimmen, welches dieser Kandidatenmerkmalspaare von Satz $S_1$ das höchste S/N-Verhältnis bereitstellt, wenn es mit den Elementen von Satz $S_2$' gruppiert wird, Akzeptieren dieses Kandidatenmerkmalspaars von Satz $S_1$ zu Satz $S_2$' und Wiederholen des Schritts (ii) mit dem aktualisierten Satz $S_2$', wobei das Hinzufügen des Kandidatenmerkmalspaars von Satz $S_1$ zu Satz $S_2$' das S/N-Verhältnis um wenigstens einen zweiten Schwellenbetrag steigert, und Ablehnen des Hinzufügens des Kandidatenmerkmalspaars von Satz $S_1$ zu Satz $S_2$' und Fortfahren zu Schritt (iv), wenn das Hinzufügen des Kandidatenmerkmalspaars von Satz $S_1$ zu Satz $S_2$' das S/N-Verhältnis nicht um wenigstens den zweiten Schwellenbetrag steigert; und

(iv) für jedes gegebene Element von Satz $S_2$', Bestimmen eines S/N-Verhältnisses für den Satz aller der Elemente von Satz $S_2$' mit Ausnahme des gegebenen Elements, Bestimmen, welches der gegebenen Elemente das höchste S/N-Verhältnis des Satzes $S_2$' ergibt, wobei das gegebene Element aus Satz $S_2$' entfernt wird, Entfernen dieses gegebenen Elements aus Satz $S_2$' und Wiederholen des Schritts (ii) mit dem aktualisierten Satz $S_2$', wobei die Entfernung dieses gegebenen Elements aus Satz $S_2$' das S/N-Verhältnis von Satz $S_2$' um wenigstens einen dritten Schwellenbetrag steigert, und Beibehalten dieses gegebenen Elements in Satz $S_2$' und Akzeptieren von Elementen des Kandidatensatzes $S_2$' zu Satz $S_2$, wobei die Entfernung dieses gegebenen Elements aus Satz $S_2$' das S/N-Verhältnis von Satz $S_2$' nicht um wenigstens den dritten Schwellenbetrag steigert.

3. Verfahren nach Anspruch 2, wobei die Größe des dritten Schwellenbetrags dieselbe ist wie die Größe des ersten Schwellenbetrags, und die Größe des zweiten Schwellenbetrags das Doppelte der Größe des ersten Schwellenbetrags ist.

4. Verfahren nach einem der vorhergehenden Ansprüche, das ferner das Bestimmen eines S/N-Verhältnisses für jeden von mehreren Merkmalspaaren aus einem ursprünglichen Satz $S_0$ von $N_0$ berechneten Zellenmerkmalen in einem oder mehreren Bildern umfasst, wobei das S/N-Verhältnis eines gegebenen Merkmalspaars eine Fähigkeit widerspiegelt, um jenes Merkmalspaar zu verwenden, um den Zellphänotyp zu klassifizieren, wobei $N_0$ eine ganze Zahl von etwa 100 bis etwa 1000 ist, und ferner das Identifizieren des Satzes $S_2$ von berechneten $N_2$ Merkmalen für die Klassifizierung des Zellphänotyps unter den Elementen der berechneten $N_p$ Merkmalspaare umfasst, wobei $N_2$ eine ganze Zahl von höchstens etwa 10 ist.

5. Verfahren nach einem der vorhergehenden Ansprüche, wobei $N_2$ eine ganze Zahl aus 2 bis 6 ist.

6. Verfahren nach einem der vorhergehenden Ansprüche, wobei $N_p$ eine ganze Zahl zwischen 10 und 30 ist.

7. Verfahren nach einem der vorhergehenden Ansprüche, wobei $N_s$ eine ganze Zahl zwischen 2 und 6 ist.

8. Verfahren nach einem der vorhergehenden Ansprüche, wobei das Verfahren das Klassifizieren des Zellphänotyps von einer oder mehreren ausgewählten Zellen durch Folgendes umfasst:

(I) für jede der einen oder der mehreren ausgewählten Zellen, Quantifizieren jedes Elements des Satzes $S_2$ von Bildmerkmalen; und
(II) für jede der einen oder der mehreren ausgewählten Zellen, Identifizieren eines Zellphänotyps für jene Zelle basierend auf den Werten der $S_2$ Bildmerkmale für jene Zelle.

9. Verfahren nach Anspruch 8, das, für jede der einen oder der mehreren ausgewählten Zellen, das Identifizieren des Zellphänotyps für jene Zelle umfasst, wobei der Zellphänotyp entweder eine Klasse, die aus zwei möglichen Klassen ausgewählt ist, oder eine Klasse ist, die aus drei oder mehr möglichen Klassen ausgewählt ist.

10. Verfahren nach Anspruch 9, wobei die Zellenmerkmale, für die die S/N-Verhältnisse bestimmt sind, ein oder mehrere Elemente umfassen, die aus der Gruppe ausgewählt sind, die aus Folgendem besteht:
einem morphologischen Merkmal, einem geometrischen Merkmal, einem Zernike-Momentmerkmal, einem Haralick-Texturmerkmal, einem Kantenmerkmal, einem Wavelet-Merkmal, einem Regionsmerkmal, einem zellulären Adjazenzmerkmal, einem Clustermerkmal, einem Phänotypformdeskriptor, einer kinetischen Messung, und einem subzellulären Lokalisierungsmerkmal (z. B. Abstand von einer Organelle zu einem Kern).

11. Verfahren nach einem der vorhergehenden Ansprüche, das das Bestimmen eines S/N-Verhältnisses für jede mögliche paarweise Kombination unter Merkmalen aus mehreren Merkmalspaaren aus einem ursprünglichen Satz $S_0$ von $N_0$ berechneten Zellenmerkmalen in einem oder mehreren Bildern umfasst, wobei das S/N-Verhältnis eines gegebenen Merkmalspaars eine Fähigkeit widerspiegelt, um jenes Merkmalspaar zu verwenden, um den Zellphänotyp zu klassizifzieren.

**12.** Verfahren nach Anspruch 11, das das Berechnen einer $N_0 \times N_0$ Matrix von linearen Koeffizienten, **W**, zum Maximieren einer Zielfunktion umfasst, wobei die Teile $W_{i,j}$ der Matrix **W** Messungen von dem S/N-Verhältnis für entsprechende Merkmalspaare (*i,j*) sind und unter Verwendung einer analytischen Lösung für eine Inversion einer symmetrischen 2x2 Matrix berechnet werden.

**13.** Verfahren nach Anspruch 12, wobei die Zielfunktion ein Verhältnis der Varianz zwischen zwei Klassen zu der Varianz innerhalb der zwei Klassen ist.

**14.** Vorrichtung für die automatische Auswahl von Bildmerkmalen, die zum Klassifizieren des Zellphänotyps verwendbar sind, wobei die Vorrichtung Mittel umfasst, die geeignet sind, um das Verfahren nach den Ansprüchen 1 bis 13 auszuführen.

**Revendications**

**1.** Procédé de sélection automatisée de caractéristiques d'image utiles pour classer un phénotype cellulaire, le procédé comprenant les étapes :

(a) de calcul d'un ensemble d'origine $S_0$ de $N_0$ caractéristiques pour des cellules imagées ayant une première classe connue et pour des cellules imagées ayant une seconde classe connue ;
(b) de sélection d'une pluralité de paires de caractéristiques dans l'ensemble d'origine $S_0$ et de détermination pour chacune desdites paires de caractéristiques d'un rapport signal/bruit (S/ N) entre la première et la seconde classes connues, le S/N étant une fonction du rapport de la variance entre des classes ($\sigma_b^2$) sur la variance au sein des classes ($\sigma_w^2$) ;
(c) d'identification, par ordre décroissant de valeur S/N, d'un nombre prédéterminé $N_p$ de paires de caractéristiques dotées de la valeur la plus élevée S/N déterminée à l'étape (b), $N_p$ étant un entier $\geq 2$ ; et
(d) après un nombre prédéfini $N_s$ de fois qu'une seule caractéristique apparaît dans les paires de caractéristiques identifiées à l'étape (c), d'omission de toutes les paires suivantes dotées de la même caractéristique à partir des paires de caractéristiques identifiées à l'étape (c) et d'identification de l'ensemble $S_1$ de caractéristiques distinctes dans les paires de caractéristiques restantes ;
(e) de sélection d'un ensemble $S_2$ de $N_2$ caractéristiques pour la classification du phénotype cellulaire à partir de l'ensemble $S_1$.

**2.** Procédé selon la revendication 1, l'étape 1(e) comprenant la sélection de l'ensemble $S_2$ :

(i) en remplissant l'ensemble candidat $S_2$' par la paire de caractéristiques ayant le rapport S/N le plus élevé parmi les $N_p$ paires de caractéristiques, puis en passant à l'étape (ii) ;
(ii) pour chaque caractéristique candidate restante dans l'ensemble $S_1$ qui n'est pas déjà dans l'ensemble $S_2$', en déterminant un rapport S/N pour l'ensemble de tous les éléments de l'ensemble $S_2$' avec la caractéristique candidate de l'ensemble $S_1$, en déterminant laquelle de ces caractéristiques candidates de l'ensemble $S_1$ fournit le rapport S/N le plus élevé lorsqu'elle est regroupée avec les éléments de l'ensemble $S_2$', en acceptant cette caractéristique candidate de l'ensemble $S_1$ dans l'ensemble $S_2$' et en répétant l'étape (ii) pour l'ensemble mis à jour $S_2$' l'ajout de la caractéristique candidate de l'ensemble $S_1$ dans l'ensemble $S_2$' augmentant le rapport S/N d'au moins une première quantité seuil, et en rejetant l'ajout de la fonctionnalité candidate de l'ensemble $S_1$ dans l'ensemble $S_2$' et en passant à l'étape (iii) si l'ajout de la caractéristique candidate de l'ensemble $S_1$ dans l'ensemble $S_2$' n'augmente pas le rapport S/N de l'ensemble $S_2$' d'au moins la première quantité seuil ;
(iii) pour chaque paire possible de caractéristiques candidates restant dans l'ensemble $S_1$ qui ne sont pas déjà dans l'ensemble $S_2$', en déterminant un rapport S/N pour l'ensemble de tous les éléments de l'ensemble $S_2$' avec la paire de caractéristiques candidates de l'ensemble $S_1$, en déterminant laquelle de ces paires de caractéristiques candidates de l'ensemble $S_1$ fournit le rapport S/N le plus élevé lorsqu'elle est regroupée avec les éléments de l'ensemble $S_2$', en acceptant cette paire de caractéristiques candidates de l'ensemble $S_1$ dans l'ensemble $S_2$' et en répétant l'étape (ii) pour l'ensemble $S_2$' mis à jour, l'ajout de la paire de caractéristiques candidates de l'ensemble $S_1$ dans l'ensemble $S_2$' augmentant le rapport S/N d'au moins une deuxième quantité seuil, et en rejetant l'ajout de la paire de caractéristiques candidates de l'ensemble $S_1$ dans l'ensemble $S_2$' et en passant à l'étape (iv) si l'ajout de la paire candidate de caractéristiques de l'ensemble $S_1$ dans l'ensemble $S_2$' n'augmente pas le rapport S/N d'au moins la deuxième quantité seuil ; et

**EP 2 756 451 B1**

(iv) pour chaque membre donné de l'ensemble $S_2$', en déterminant un rapport S/N pour l'ensemble de tous les éléments de l'ensemble $S_2$' à l'exception de l'élément donné, en déterminant lequel des éléments donnés a pour résultat le rapport S/N le plus élevé de l'ensemble $S_2$' avec le membre donné supprimé de l'ensemble $S_2$', en supprimant cet élément donné de l'ensemble $S_2$' et en répétant l'étape (ii) pour l'ensemble $S_2$' mis à jour, la suppression de cet élément donné de l'ensemble $S_2$' augmentant le rapport S/N de l'ensemble $S_2$' d'au moins une troisième quantité seuil, et en maintenant cet élément donné dans l'ensemble $S_2$' et en acceptant des éléments de l'ensemble candidat $S_2$' dans l'ensemble $S_2$, la suppression de cet élément donné de l'ensemble $S_2$' n'augmentant pas le rapport S/N de l'ensemble $S_2$' d'au moins la troisième quantité seuil.

3. Procédé selon la revendication 2, l'amplitude de la troisième quantité seuil étant la même que l'amplitude de la première quantité seuil, et l'amplitude de la deuxième quantité seuil étant le double de l'amplitude de la première quantité seuil.

4. Procédé selon l'une quelconque des revendications précédentes, comprenant en outre la détermination d'un rapport S/N pour chacune d'une pluralité de paires de caractéristiques à partir d'un ensemble d'origine $S_o$ de $N_o$ caractéristiques calculées de cellules dans une ou plusieurs images, le rapport S/N d'une paire de caractéristiques donnée reflétant une capacité à utiliser cette paire de caractéristiques pour classer le phénotype cellulaire, $N_o$ étant un entier d'environ 100 à environ 1 000, et comprenant en outre l'identification de l'ensemble $S_2$ de $N_2$ caractéristiques calculées pour classification du phénotype cellulaire parmi les éléments des $N_p$ paires de caractéristiques calculées, $N_2$ étant un nombre entier ne dépassant pas environ 10.

5. Procédé selon l'une quelconque des revendications précédentes, $N_2$ étant un entier entre 2 et 6.

6. Procédé selon l'une quelconque des revendications précédentes, $N_p$ étant un entier entre 10 et 30.

7. Procédé selon l'une quelconque des revendications précédentes, $N_s$ étant un entier compris entre 2 et 6.

8. Procédé selon l'une quelconque des revendications précédentes, le procédé comprenant la classification du phénotype cellulaire d'une ou plusieurs cellules sélectionnées :

(I) pour chacune de la ou des cellules sélectionnées, en quantifiant chaque membre de l'ensemble $S_2$ de caractéristiques d'image ; et
(II) pour chacune de la ou des cellules sélectionnées, en identifiant un phénotype de cellule pour cette cellule sur la base des valeurs des caractéristiques d'image $S_2$ pour cette cellule.

9. Procédé selon la revendication 8, comprenant, pour chacune de la ou des cellules sélectionnées, l'identification du phénotype cellulaire pour cette cellule, le phénotype cellulaire étant soit une classe sélectionnée parmi deux classes possibles, soit une classe sélectionnée parmi au moins trois classes possibles.

10. Procédé selon la revendication 9, les caractéristiques des cellules pour lesquelles les rapports S/N sont déterminés comprenant un ou plusieurs éléments choisis dans le groupe constitué par : une caractéristique morphologique, une caractéristique géométrique, une caractéristique de moment Zernike, une caractéristique de texture Haralick, une caractéristique de bord, une caractéristique d'ondelette, une propriété de région, une caractéristique de contiguïté cellulaire, une caractéristique de regroupement, un descripteur de forme de phénotype, une mesure cinétique et une caractéristique de localisation subcellulaire (par exemple, la distance d'un organite à un noyau).

11. Procédé selon l'une quelconque des revendications précédentes, comprenant la détermination d'un rapport S/N pour chaque combinaison possible de caractéristiques par paire parmi une pluralité de paires de caractéristiques à partir d'un ensemble d'origine $S_0$ de $N_0$ caractéristiques calculées de cellules dans une ou plusieurs images, le rapport S/N d'une paire de caractéristiques donnée reflétant une capacité à utiliser cette paire de caractéristiques pour classer le phénotype cellulaire.

12. Procédé selon la revendication 11, comprenant le calcul d'une matrice $N_0$ x $N_0$ de coefficients linéaires, **W**, pour maximiser une fonction objective, les éléments $W_{i,j}$ de la matrice **W** étant des mesures du rapport S/N pour les paires de caractéristiques correspondantes *(i, j)* et étant calculées à l'aide d'une solution analytique pour l'inversion d'une matrice symétrique 2 x 2.

13. Procédé selon la revendication 12, la fonction objective étant un rapport de la variance entre deux classes sur la variance au sein des deux classes.

14. Appareil pour la sélection automatisée de caractéristiques d'image utiles pour classer un phénotype cellulaire, l'appareil comprenant des moyens adaptés pour exécuter le procédé selon les revendications 1 à 13.

100

102 — Determine S/N for pairs
of features in $S_0$

104 — Identify set $S_2$

106 — Identify $N_p$

108 — Identify set $S_1$

FIG. 1

100

202 Populate set $S_2'$

204 Identify candidate feature of set $S_1$ that provides highest S/N

Is increase in S/N greater than a first threshold amount?

yes

206 Accept the candidate feature into $S_2'$

No

208 Reject addition of the candidate feature into set $S_2'$

Go to Step 302

FIG. 2

100

302

Identify pair of candidate features
that provides highest S/N

Go to Step 204

Is increase in S/N
greater than a second
threshold amount?

Yes

Accept the pair of
candidate features
into $S_2$'

304

No

306

Reject addition of the pair of
candidate features into set $S_2$'

Go to Step 402

FIG. 3

100

402 — Identify the candidate feature that would provide the highest S/N if it were removed from $S_2$'

Is decrease in S/N less than a third threshold amount?

Yes → Remove the candidate feature from $S_2$'

Go to Step 204

404

No

406 — Retain the candidate feature in $S_2$', and accept members of $S_2$' into set $S_2$

FIG. 4

100

502 — Quantify each member of the set $S_2$ of image features

504 — Identify a cell phenotype based on the values of the $S_2$ image features

FIG. 5

FIG. 6

FIG. 7

EP 2 756 451 B1

FIG. 8

22

FIG. 9

FIG. 10

FIG. 11

FIG. 12

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **X. CHEN ; M. VELLISTE ; R. F. MURPHY.** Automated Interpretation of Subcellular Patterns in Fluorescence Microscopy Images for Location Proteomics. *Cytometry Part A,* 2006, vol. 69A, 631-640
- **N. A. HAMILTON ; R. S. PANTELIC ; K. HANSON ; R. D. TEASDALE.** Fast Automated Cell Phenotype Image Classification. *BMC Bioinformatics,* 2007, vol. 8, 110
- **L.-H. LOO ; L. F. WU ; S. J. ALTSCHULER.** Image-Based Multivariate Profiling of Drug Responses from Single Cells. *Nature Methods,* 2007, vol. 4 (5), 445-453

- **J. WANG ; X. ZHOU ; P. L. BRADLEY ; S.-F. CHANG ; N. PERRIMON ; S. T. C. WONG.** Cellular Phenotype Recognition for High-Content RNA Interference Genome-Wide Screening. *J Biomolecular Screening,* 2008, vol. 13 (1), 29-39
- **V. LJOSA ; A. E. CARPENTIER.** Introduction to the Quantitative Analysis of Two-Dimensional Fluorescence Microscopy Images for Cell-Based Screening. *PLoS Computational Biology,* 2009, vol. 5 (12), el000603
- **M. HELD ; M. H. A. SCHMITZ ; B. FISCHER ; T. WALTER ; B. NEUMANN ; M. H. ALMA ; M. PETER ; J. ELLENBERG ; D. W. GERLICH.** CellCognition: Time-Resolved Phenotype Annotation in High-Throughput Live Cell Imaging. *Nature Methods,* 2010, vol. 7 (9), 747-754